Europäisches Patentamt

European Patent Office

Office européen des brevets

(11) Publication number: **0 073 501**
**B1**

(12) **EUROPEAN PATENT SPECIFICATION**

(45) Date of publication of patent specification: **17.12.86**

(51) Int. Cl.⁴: **G 01 N 21/03, G 01 N 21/11**

(21) Application number: **82107913.4**

(22) Date of filing: **27.08.82**

(54) **A cell for measurement.**

(30) Priority: **28.08.81 JP 135245/81**
**28.08.81 JP 135246/81**

(43) Date of publication of application:
**09.03.83 Bulletin 83/10**

(45) Publication of the grant of the patent:
**17.12.86 Bulletin 86/51**

(84) Designated Contracting States:
**BE CH DE FR GB IT LI NL SE**

(56) References cited:
**DE-U-1 995 731**
**DE-U-6 805 832**
**FR-A-3 225 601**
**GB-A-2 068 543**
**US-A-3 225 601**
**US-A-3 419 722**

(73) Proprietor: **Eisai Co., Ltd.**
**6-10, Koishikawa 4-chome Bunkyo-ku**
**Tokyo 112 (JP)**

(72) Inventor: **Yuzaburo, Nanba**
**No. 72-3, Sayamagaoka 2-chome**
**Tokorozawa-shi Saitama-ken (JP)**

(74) Representative: **Popp, Eugen, Dr. et al**
**MEISSNER, BOLTE & PARTNER**
**Widenmayerstrasse 48 Postfach 86 06 24**
**D-8000 München 86 (DE)**

Courier Press, Leamington Spa, England.

## Description

The present invention relates to an apparatus for evacuating and cleaning a sample cell of a photometric analyser, the apparatus comprising

— a holder plate adapted to be detachably mounted at the open end of the sample cell,

— an injection tube mounted in the holder plate so as to extend into the sample cell when the holder plate is mounted at said open end, the injection tube being connected to a supply pump arranged to supply a cleaning liquid from a reservoir,

— a suction tube mounted in the holder plate in such a way that it extends into the sample cell down to the bottom thereof when the holder plate is mounted at said open end, the suction tube being connected to a suction pump, and

— control circuit means for timing the evacuation and cleaning of the sample cell.

Such an apparatus is known from GB—A—2,068,543. This publication discloses methods and apparatus for cleaning reaction vessels, wherein the analyser includes a plurality of reaction vessels or cells. In the disclosed embodiments, all these vessels are mounted on a complicated structure including a rotor or a chain type drive in order to move the vessels or cells from one position to the next one in order to carry out a plurality of measurements.

Accordingly, due to the system of using a plurality of vessels, the problem of using a single cell is not touched at all in the specification of GB—A—2,068,543. Furthermore, the holder plate in that structure is neither provided with an injection opening for the sample nor adapted to be mounted at the open end when the sample cell is disposed in the optical measurement path of the analyser. Moreover, the known apparatus does neither need nor provide for a constant volume pump nor series of control timers for operating the electromagnetic valve and the suction pump within predetermined periods so that one and the same sample cell can be used in predetermined time intervals for measurement purposes.

US—A—3,225,601 refers to liquid sample containers for use in a spectrophotometer. In this connection, a structure for filling and discharging a cell is described. However, the structure disclosed in US—A—3,225,601 has to be operated manually by means of a lever. Moreover, the structure disclosed in this publication does neither disclose timers nor the use of a cleaning liquid. Rather, flushing out the cell, by filling and emptying, with the sample to be measured is done in those cases where accurate measurements are requested wherein the view is taken that this handling would reduce any contamination to a negligible proportion. It is quite clear that for this reason it is not possible that the necessary measurements can be made continuously and effectively within given time intervals if necessary.

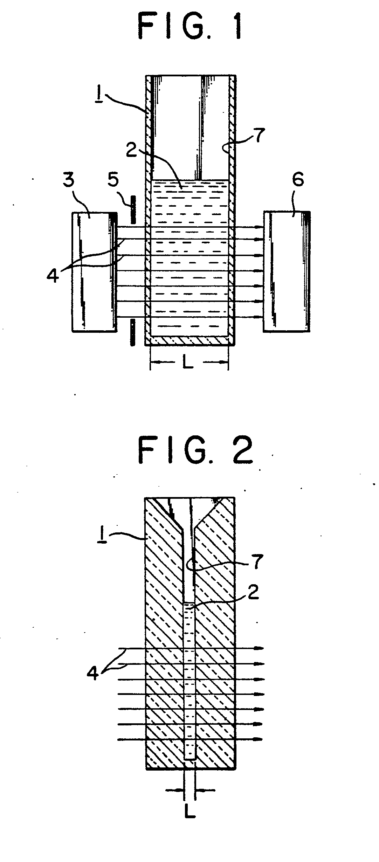

Generally, the absorbance of a liquid sample such as antibody, antigen, blood coagulation, blood serum, reaction liquid and others is measured using a device such as shown in Fig. 1. A liquid sample 2 is received by a cell 1 of transparent glass for optical measurement.

A ray 4 having a wave length of for example 300—500 nm is radiated from a light source 3 on one side of the cell to the sample 2 through a slit plate 5. The absorbance of the ray 4 due to the sample 2 is detected by a detector 6 such as a photo tube on the other side of the cell 1.

Conventionally, in the optical measurement device like this, a so called standard cell 1 generally used has a shape of a square prism with an optical path length L of 10 mm as shown in Fig. 1.

The sample receiving portion of the standard cell 1 is too large for optical measurement of the liquid sample 2 of antibody and others so that a sample of too large quantity is required and a dense sample has to be diluted for measurement since it is difficult for the ray 4 to pass through a dense sample.

Therefore, a cell 1 as shown in Fig. 2 is normally used wherein the sample receiving volume is reduced and the optical path length is shortened. The cell 1 shown in Fig. 2 has the shape of a square prism like that of the standard cell 1 in Fig. 1, having an inner optical path length L, for example, of 2—0,5 mm, this narrow portion being for receiving the sample 2. In this case, the defect as mentioned above is obtained.

However, simply narrowing the sample receiving portion makes it difficult to discharge the sample once received and to clean the interior of the cell. Accordingly, the interior of the cell is polluted by the sample used previously therefore, and the exact value cannot be obtained for the next sample. For cleaning the cell perfectly, the cell has necessarily to be removed from the measuring optical path of the measuring instrument and to be reset to the original position for each of the measurements.

It is extremely hard or even impossible to effectively measure many samples one after the other.

The object underlying the invention is to provide an apparatus for evacuating and cleaning a sample cell of a photometric analyser when this cell is disposed in the optical measurement path of the analyser so that a single cell can be used for continuously and effectively performing the requested measurement.

The solution according to the invention is characterized in that

the holder plate is provided with an injection opening for the sample and is adapted to be mounted at the said open end when the sample cell is disposed in the optical measurement path of the photometric analyser,

the supply pump is a constant volume pump,

the suction tube is connected to the suction pump through an electromagnetic valve, and

the control circuit means comprise a first timer opening the electromagnetic valve for a first predetermined period, a second timer actuating the constant volume pump for a second predetermined period, and a third timer opening the electromagnetic valve for a predetermined period.

Preferably, the apparatus according to the invention is arranged in such a manner that the control circuit means are arranged to actuate the electromagnetic valve and the constant volume pump repetitively in sequence.

The object and features of the present invention will be apparent from the following description with reference to the accompanying drawings, wherein

Fig. 1 is a sectional drawing of a standard cell,

Fig. 2 is a sectional view of a known cell having a narrow sample receiving portion,

Fig. 3 is a perspective view of parts of a disassembled cell for use in the apparatus according to the invention,

Fig. 4 is a cross sectional view along the line IV—IV of the assembled cell in Fig. 5, and

Fig. 5 is a cross sectional view along the line V—V in Fig. 4 showing an apparatus according to the present invention and a diagram of the associated piping and wiring in connection with a sample cell.

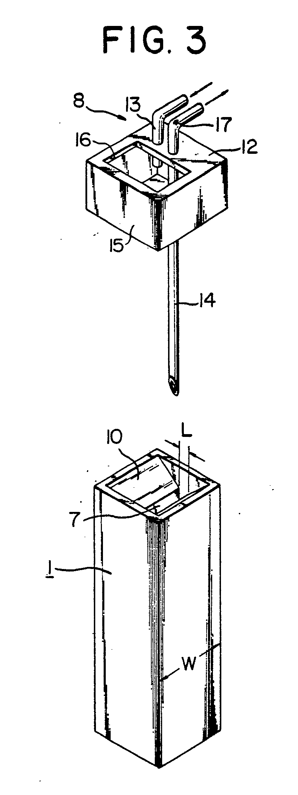

An embodiment according to the present invention will be described in detail with reference to Figs. 3—5 hereinafter.

The apparatus according to the present invention is shown in connection with a cell 1 for receiving a sample 2, an attachment portion 8 attached so as to be freely set to and removed from the cell 1, and a cleaning device 9 connected to the attachment portion.

The cell 1 is wholly composed of transparent glass, its shape being of a square prism having an opening 10 on the upper edge of the cell 1, and a bottom portion 11 at the bottom. The shape and the size of the interior of the cell 1 depend upon the object of use and the kind of sample 2. The cell 1 shown in Fig. 1 has the shape of a square prism with an optical path length L of about 10 mm. The cell 1 shown in Fig. 2 and Fig. 3 has the same width W as the cell shown in Fig. 1. The sample receiving portion 7 is narrow with an optical length L of 2—0,5 mm. The upper portion of the cell has an opening 10 inclined against the upper end of the cell 1. The shape of the cell 1 is not limited to be prism-like, rather cylindrical cells, triangular prism-like cells and others may also be used.

The attachment portion 8 comprises a holder plate 12 to be attached to the cell 1 so as to be freely set to and removed from the cell 1.

The holder plate 12 has an injection tube 13 and a suction tube 14 for the sample and a cleaning liquid.

When the holder plate 12 is coupled to the opening portion 10 of the cell 1, the holder plate 12 forms a fixing guide 15 around the cell 1. The upper surface of the holder plate 12 has an opening 16 for injecting the sample 2. The injection opening 16 has dimensions sufficient for putting in the sample from the tip of a pipette, a nozzle for partial injection, etc.

The shape of the holder plate 12 is not limited to that shown in the diagrammatic drawing. It can be varied according to the shape of the cell 1 into cylindrical, triangular prismatic or another special form.

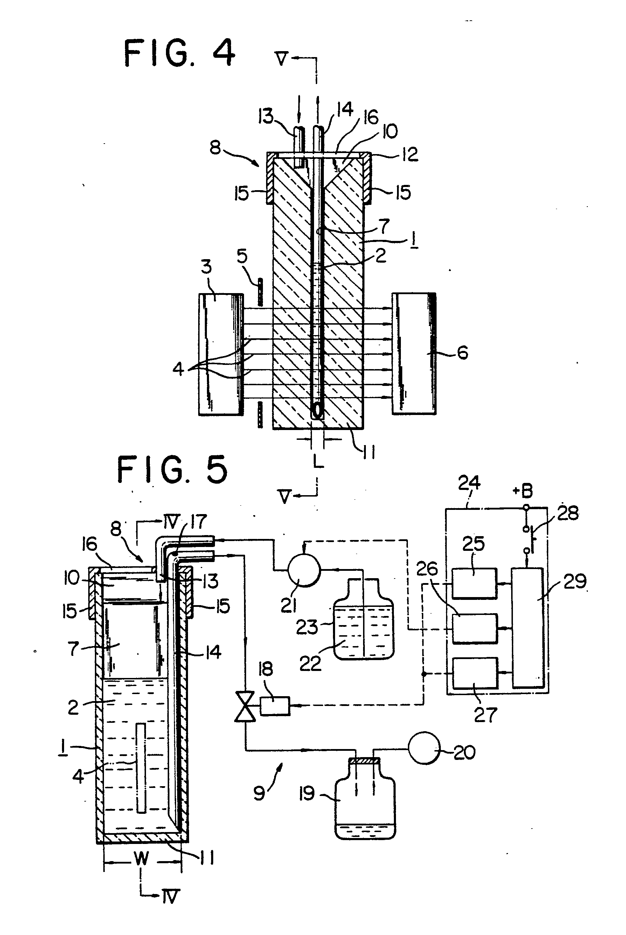

The opening 10 of the cell 1 may be freely designed so that it may not surround the whole periphery of the cell 1 or it may partially surround the cell 1 with a suitable stopper. The lower end of the injection tube 13 faces to the opening portion 10. The suction tube 14 has a sufficient length for its lower end to reach the bottom 11 of the cell 1. The diameter of the cell 1 is large enough so that the suction tube 13 can be inserted into the narrow sample receiving portion 7. The position where the suction tube 14 is attached is so determined that it can be easily inserted into the sample receiving portion 7 and does not affect the ray passing position 4 as shown in Fig. 5. The lower end portion of the suction tube 14 is preferably cut obliquely and the sharp tip being made to extend downwards and reach the bottom 11. Accordingly, the sample and the cleaning liquid in the cell 1 can perfectly be sucked off. A small hole 17 for ventilation is drilled in the projecting portion of the suction tube 14. This hole 17 prevents the sample liquid to be measured next from being sucked to flow out after discharging the cleaning liquid by suction because of the surface tension, the loss of pressure reduction in the tube connected to the suction tube 14 etc.

A concrete example of the piping and wiring of the cleaning device 9 is shown in Fig. 5 in which the suction tube 14 is tightly connected to a discharge bottle 19 through an electromagnetic valve 18. The discharge bottle 19 is tightly connected to a suction pump 20. The injection tube 13 is connected to a bottle 23 for cleaning liquid 22 filled with the liquid 22 through a constant volume pump 21.

The electromagnetic valve 18, the suction pump 20 and the constant volume pump 21 are controlled by a timer circuit 24. The control circuit means 24 comprises a first timer 25, a second timer 26 and a third timer 27. The first timer 25 and the third timer 27 are coupled with the electromagnetic valve 18 and the suction tube 14, and the second timer 26 is coupled with the constant volume pump 21. On actuation of a switch 28 connected to an electrical source B the first timer 25, the second timer 26 and the third timer 27 are sequentially operated through a control circuit 29. For example, these timers 25, 26 and 27 operate intermittently and sequentially with respective intervals of 1 second, 1 second and 2 seconds for respectively discharging the sample 2, injecting the cleaning liquid 22 and discharging the cleaning liquid 22 automatically.

The operation of the device according to the present invention will be described in the following.

As shown in Fig. 4 the cell 1 is set into the optical path of a light ray 4 from the light source 3 to the detector 6 through the slit plate 5. The attachment portion 8 is coupled to the cell 1. In this state, the sample liquid 2 is put into the injection opening 16 with a pipette. The ray 4 with predetermined wave length is radiated through the cell 1 for the optical measurement such as absorbance.

After the measurement, when the switch 28 of the control circuit means 24 is switched on, the first timer 25 gives a signal for 1 second to open the electromagnetic valve 18, and the sample 2 which has been measured in the cell 1 is sucked out by the suction tube 14 and is discharged to the bottle 19 for discharged liquid. When the output of the first timer 25 becomes zero, the electromagnetic valve 18 is closed, the suction being stopped.

Next, a signal for 1 second from the second timer 26 operates the constant volume pump 21 for supplying a predetermined volume of cleaning liquid 22 to the cell 1 through the injection tube 13 to fill the cell 1 almost completely. When the output of the second timer 26 becomes zero the constant volume pump 21 ceases to operate.

An output signal having a duration of 2 seconds from the third timer 27 opens the electromagnetic valve 18 to suck up and discharge the cleaning liquid 22 from the cell 1.

In the first process, the sample 2 which has been measured is perfectly sucked out, in the second process the cleaning liquid 22 is injected into the cell 1 for cleaning the interior, and in the third process, the cleaning liquid 22 is perfectly discharged to clean the cell 1 even if the sample receiving portion 7 is narrow.

Following the injection of the sample 2, the measurement is to be performed. After cleaning the cell 1 from the previous sample 2, the injected new sample 2 may be sucked little by little due to the surface tension of the sample 2 or the pressure reduction loss in the tube 14 connecting the cell 1 and the suction pump 20. However, according to the apparatus described above, the suction tube 14 is provided with a small hole 17 as an escape of minimal pressure for preventing the sample 2 from being sucked out.

Further, since the cleaning liquid 22 in the cell 1 can be discharged without leaving even a drop, the cleaning operation is not necessary to be repeated. However, the cleaning operation may be repeated many a time, if desired, by controlling the second and third timers 26 and 27, respectively, with the counter of the control circuit 29.

As described above, the apparatus according to the present invention demonstrates the ability of increasing the measurement accuracy because of the perfect discharge of the sample already measured and the cleaning liquid and of the sufficient cleaning of the interior of the cell.

Once the cell 1 is set fixedly on the cell fixing seat in the optical path of the optical measuring device, many measurements can be performed easily and continuously with one and the same cell eliminating the operations of setting and removing the cell for each measurement. Thus, the measuring operation is made more effective as compared with the conventional operation. Even special types of cells can be used for the measurement by using and attaching a corresponding type of attachment 8, and the control circuit means 24 allow continuous and automatic sample measurements.

## Claims

1. An apparatus for evacuating and cleaning a sample cell of a photometric analyser, the apparatus comprising
— a holder plate (12) adapted to be detachably mounted at the open end of the sample cell (1),
— an injection tube (13) mounted in the holder plate (12) so as to extend into the sample cell (1) when the holder plate is mounted at said open end, the injection tube (13) being connected to a supply pump (21) arranged to supply a cleaning liquid (22) from a reservoir (23),
— a suction tube (14) mounted in the holder plate (12) in such a way that it extends into the sample cell (1) down to the bottom thereof when the holder plate (12) is mounted at said open end, the suction tube (14) being connected to a suction pump (20),
— control circuit means (24) for timing the evacuation and cleaning of the sample cell (1),
characterized in that
— the holder plate (12) is provided with an injection opening (16) for the sample (2) and is adapted to be mounted at the said open end when the sample cell (1) is disposed in the optical measurement path of the photometric analyser (3—6),
— the supply pump is a constant volume pump (21),
— the suction tube (14) is connected to the suction pump (20) through an electromagnetic valve (18), and
— the control circuit means (24) comprise a first timer (25) opening the electromagnetic valve (18) for a first predetermined period, a second timer (26) actuating the constant volume pump (21) for a second predetermined period, and a third timer (27) opening the electromagnetic valve (18) for a third predetermined period.

2. The apparatus according to claim 1, characterized in that the control circuit means (24) are arranged to actuate the electromagnetic valve (18) and the constant volume pump (21) repetitively in sequence.

## Patentansprüche

1. Vorrichtung zum Entleeren und Reinigen einer Meßzelle eines photometrischen Analysators, wobei die Vorrichtung aufweist
— eine Halteplatte (12), die am offenen Ende der Meßzelle (1) lösbar anbringbar ist,
— ein Injektionsrohr (13), das in der Halteplatte (12) so angebracht ist, daß es sich in die Meßzelle (1) erstreckt, wenn die Halteplatte an dem offenen Ende angebracht ist, wobei das Injektionsrohr (13) an eine Versorgungspumpe (21) angeschlossen ist, die so angeordnet ist, daß sie eine Reinigungsflüssigkeit (22) aus einem Vorratsbehälter (23) zuführt,

— ein Saugrohr (14), das in der Halteplatte (12) in der Weise angebracht ist, daß es sich in die Meßzelle (1) hinab bis zu dessen Boden erstreckt, wenn die Halteplatte (12) an dem offenen Ende angebracht ist, wobei das Saugrohr (14) an eine Saugpumpe (20) angeschlossen ist,

— eine Steuerschaltungsanordnung (24) zur zeitlichen Steuerung der Entleerung und der Reinigung der Meßzelle (1),

dadurch gekennzeichnet,

— daß die Halteplatte (12) mit einer Injektionsöffnung (16) für die Probe (2) versehen und so ausgelegt ist, daß sie an dem offenen Ende montiert ist, wenn die Meßzelle (1) in dem optischen Meßweg des photometrischen Analysators (3—6) angeordnet ist,

— daß die Versorgungspumpe eine Pumpe (21) mit konstantem Volumen ist,

— daß das Saugrohr (14) an die Saugpumpe (20) über ein Elektromagnetventil (18) angeschlossen ist,

— und daß die Steuerschaltungsanordnung (24) einen ersten Zeitschalter (25), der das Elektromagnetventil (18) für eine erste vorgegebene Zeitspanne öffnet, einen zweiten Zeitschalter (26), der die Pumpe (21) mit konstantem Volumen für eine zweite vorgegebene Zeitspanne berätigt, und einen dritten Zeitschalter (27) aufweist, der das Elektromagnetventil (18) für eine dritte vorgegebene Zeitspanne öffnet.

2. Vorrichtung nach Anspruch 1,
dadurch gekennzeichnet,
daß die Steuerschaltungsanordnung (24) so angeordnet ist, daß sie das Elektromagnetventil (18) und die Pumpe (21) mit konstantem Volumen der Reihe nach wiederholt betätigt.

**Revendications**

1. Appareil pour la vidange et le nettoyage d'une cellule d'échantillon d'un analyseur photométrique, l'appareil comprenant:

— une plaque de maintien (12) prévue pour être montée de façon amovible à l'extrémité ouverte de la cellule d'échantillon (1),

— un tube d'injection (13) monté dans la plaque de maintien (12) de manière à être disposé à l'intérieur de la cellule d'échantillon (1) lorsque la plaque de maintien est montée à ladite extrémité ouverte, le tube d'injection (13) étant raccordé à une pompe d'alimentation (21) prévue pour fournir un liquide de nettoyage (22) à partir d'un réservoir (23),

— un tube d'aspiration (14) monté dans la plaque de maintien (12) de manière à s'étendre à l'intérieur de la cellule d'échantillon (1) jusqu'au fond de celle-ci lorsque la plaque de maintien (12) est montée à ladite extrémité ouverte, le tube d'aspiration (14) étant raccordé à une pompe d'aspiration (20),

— un circuit de commande (24) pour déterminer les périodes d'évacuation et de nettoyage de la cellule d'échantillon (1),

caractérisé en ce que:

— la plaque de maintien (12) comporte un orifice d'injection (16) pour l'échantillon (2) et elle est prévue pour être montée à ladite extrémité ouverte lorsque la cellule d'échantillon (1) est disposée dans le chemin de mesure optique de l'analyseur photométrique (3—6),

— la pompe d'alimentation est une pompe à volume constant (21),

— le tube d'aspiration (14) est raccordé à la pompe d'aspiration (20) par l'intermédiaire d'une vanne électromagnétique (18), et

— le circuit de commande (24) comprend une première minuterie (25) qui ouvre la vanne électromagnétique (18) pendant une première période prédéterminée, une deuxième minuterie (26) qui actionne la pompe à volume constant (21) pendant une deuxième période prédéterminée, et une troisième minuterie (27) qui ouvre la vanne électromagnétique (18) pendant une troisième période prédeterminée.

2. Appareil suivant la revendication 1, caractérisé en ce que le circuit de commande (24) est agencé de manière à actionner la vanne électromagnétique (18) et la pompe à volume constant (21) répétitivement en séquence.

# F I G. 1

# F I G. 2

# FIG. 3

# FIG. 4

# FIG. 5